# EUROPEAN PATENT APPLICATION

(11) **EP 3 489 804 A1**
(43) Date of publication of application: **29.05.2019**
(21) Application number: 18207700.8
(22) Date of filing: 22.11.2018
(51) Int. Cl.: G06F 3/01, G06F 3/0346

(54) **HAPTIC ACCESSORY APPARATUS**

(30) Priority: 22.11.2017 US 201715820990
(71) Applicant: Immersion Corporation, San Jose CA 95134 (US)
(72) Inventor: Saboune, Jamal, Montreal, Quebec H2W 1N6 (CA); Cruz-Hernandez, Juan Manuel, Montreal, Quebec H3Z 1T1 (CA); Maalouf, Johnny, Laval, Québec H7X 2P8 (CA); Wu, Liwen, Montreal, Quebec H2X 2L6 (CA); Forest, Simon, Montréal, Québec H1X 3P2 (CA)
(74) Representative: Latscha Schöllhorn Partner AG

(57) **Abstract**

A haptic accessory apparatus for a virtual reality (VR) or augmented reality (AR) environment is presented. The haptic accessory apparatus comprises a conformable body adapted to be attached to a physical object, a haptic output device, a motion sensor configured to track motion of the haptic accessory apparatus, a wireless communication interface unit, a processor, and a power source. The wireless communication unit is configured to wirelessly communicate sensor information from the motion sensor to a computer system configured to execute an application that provides the VR or AR environment, and to receive a signal from the computer system that indicates the haptic accessory apparatus is to output a haptic effect, wherein the haptic output device is configured to output the haptic effect based on the signal.

## Description

### FIELD OF THE INVENTION

The present invention is directed to a haptic accessory apparatus that is attachable to a physical object, and has application in user interfaces, gaming, and consumer electronics.

### BACKGROUND

As electronic user interface systems become more prevalent, the quality of the interfaces through which humans interact with these systems is becoming increasingly important. Haptic feedback, or more generally haptic effects, can improve the quality of the interfaces by providing cues to users, providing alerts of specific events, or providing realistic feedback to create greater sensory immersion within a virtual environment. Examples of haptic effects include kinesthetic haptic effects (such as active and resistive force feedback), vibrotactile haptic effects, and electrostatic friction haptic effects.

### SUMMARY

The following detailed description is merely exemplary in nature and is not intended to limit the invention or the application and uses of the invention. Furthermore, there is no intention to be bound by any expressed or implied theory presented in the preceding technical field, background, brief summary or the following detailed description.

One aspect of the embodiments herein relate to a haptic accessory apparatus for a virtual reality (VR) or augmented reality (AR) environment. The haptic accessory apparatus comprises a conformable body adapted to be attached to a physical object, a haptic output device disposed on or in the conformable body, a motion sensor disposed on or in the conformable body and configured to track motion of the haptic accessory apparatus, and a wireless communication interface unit (and/or a wired communication interface unit). The wireless communication unit is configured to wirelessly communicate sensor information from the motion sensor to a computer system configured to execute an application that provides the VR or AR environment, and to receive a signal from the computer system that indicates the haptic accessory apparatus is to output a haptic effect, wherein the haptic output device of the haptic accessory apparatus is configured to output the haptic effect based on the signal. The haptic accessory apparatus further comprises a processor and a power source. The processor is disposed on or in the conformable body and in communication with at least the haptic output device, the motion sensor, and the wireless communication interface unit. The power source disposed on or in the conformable body and configured to provide power to at least the haptic output device, the processor, and the wireless communication interface unit.

In an embodiment, the conformable body is formed from a flexible layer, and is reconfigurable to conform to different shapes of different physical objects.

In an embodiment, the haptic accessory apparatus further comprises a user input element disposed on the conformable body, wherein the user input element is at least one of a trigger and a joystick, wherein the user input element is in communication with the processor.

In an embodiment, the haptic accessory apparatus is configured to provide handheld controller functionality and haptic functionality to the physical object when the haptic accessory apparatus is attached to the physical object.

In an embodiment, the conformable body is configured to be wrapped around at least a portion of the physical object.

In an embodiment, the conformable body comprises an elastomeric material that is configured to be elastically stretched to fit around the at least a portion of the physical object.

In an embodiment, the conformable body forms an elastic band having a loop shape.

In an embodiment, the haptic accessory apparatus further comprises one or more additional sensors configured to sense at least one of stretching and bending of the conformable body, wherein the processor is configured to determine at least one of an estimated size and estimated shape of the physical object based on signals from the one or more additional sensors.

In an embodiment, the haptic output device is an electrostatic friction (ESF) actuator configured to simulate a texture based on the signal from the computer system.

In an embodiment, the haptic output device is a piezoelectric actuator configured to output a vibrotactile haptic effect based on the signal from the computer system.

In an embodiment, the haptic output device is at least one of an ultrasound haptic actuator and a thermal generator.

In an embodiment, the sensor information output by the motion sensor indicates at least one of position and orientation of the haptic accessory apparatus.

In an embodiment, the conformable body is flexible and formed from a polymeric material, and wherein the processor, the haptic output device, the power source, the motion sensor, and the wireless communication interface unit are embedded in the polymeric material.

In an embodiment, the motion sensor of the haptic accessory apparatus comprises at least one of an accelerometer, inertial measurement unit (IMU), and a gyroscope.

One aspect of the embodiments herein relate to a haptic-enabled system for providing a virtual reality (VR) or augmented reality (AR) environment. The system comprises a computer system and a haptic accessory apparatus. The computer system comprises a first processor and a display device, wherein the first processor is configured to execute an application that provides the VR or AR environment, and the display device is configured to display the VR or AR environment. The haptic accessory apparatus comprises a conformable body adapted to be attached to a physical object having no handheld controller functionality when detached from the haptic accessory apparatus, and wherein the haptic accessory apparatus is configured to provide a physical object with handheld controller functionality when the haptic accessory apparatus is attached to the physical object. The haptic accessory apparatus further comprises a haptic output device, a motion sensor, a wireless communication interface unit, a second processor, and a power source. The haptic output device is disposed on or in the conformable body. The motion sensor is disposed on or in the conformable body and configured to track motion of the haptic accessory apparatus. The wireless communication interface unit is configured to wirelessly communicate with the computer system. The second processor is disposed on or in the conformable body and in communication with the haptic output device, the motion sensor, and the wireless communication interface unit. The power source is disposed on or in the conformable body and is configured to provide power to at least the haptic output device, the second processor, and the wireless communication interface unit, The first processor of the computer system is configured to receive sensor information from the motion sensor of the haptic accessory apparatus via the wireless communication interface unit thereof, to control a virtual object of the VR or AR environment based on the sensor information, to determine that a haptic effect associated with the virtual object is to be generated, and to communicate a signal to the second processor via the wireless communication interface unit, wherein the signal indicates that the haptic accessory apparatus is to generate the haptic effect, and the haptic output device of the haptic accessory apparatus is configured to output the haptic effect based on the signal.

In an embodiment, the conformable body is flexible and formed from a polymeric material, and is reconfigurable to conform to different shapes of different physical objects, and wherein the processor, the haptic output device, the power source, the motion sensor, and the wireless communication interface unit are embedded in the polymeric material.

In an embodiment, the sensor information indicates at least one of a position and orientation of the haptic accessory apparatus, and wherein the first processor is configured to change at least one of a displayed position and orientation of the virtual object on the display device based on the sensor information.

In an embodiment, the first processor is configured to associate a physical object of a plurality of physical objects with the virtual object in a memory of the computer system.

In an embodiment, the virtual object has a shape to be displayed on the display device, wherein the first processor is configured to determine that the physical object of the plurality of physical objects is to be associated with the virtual object by determining that a shape of the physical object is substantially the same as the shape of the virtual object.

In an embodiment, the haptic-enabled system further comprises a camera in communication with the first processor, wherein the first processor is configured to determine that the shape of the physical object of the plurality of physical objects is substantially the same as the shape of the virtual object based on an image captured by the camera.

In an embodiment, the first processor is further configured to cause the display device to display an indication that the haptic accessory apparatus should be manually attached to the physical object of the plurality of physical objects.

In an embodiment, the physical object of the plurality of physical objects is a first physical object and a second physical object of the plurality of physical objects and the haptic accessory apparatus is configured to be attached to each of the first physical object and the second physical object. The first processor is configured to detect a change from the haptic accessory apparatus being attached to the first physical object to the haptic accessory apparatus being attached to the second physical object, and is configured to change an association of the virtual object from being associated with the first physical object to being associated with the second physical object in the memory of the computer system.

In an embodiment, the haptic accessory apparatus further comprises one or more additional sensors configured to sense at least one of stretching and bending of the conformable body of the haptic accessory apparatus, wherein the second processor is configured to determine at least one of an estimated size and estimated shape of the physical object of the plurality of physical objects based on additional sensor information from the one or more additional sensors, and to communicate the at least one of the estimated size and estimated shape of the physical object to the first processor.

In an embodiment, the signal that indicates the haptic accessory apparatus is to generate the haptic effect indicates at least one of an intensity, frequency, and type of the haptic effect, and wherein the first processor is configured to determine the at least one of the intensity, frequency, and type indicated in the signal based on at least one of the estimated size and estimated shape of the physical object.

In an embodiment, the signal that indicates the haptic accessory apparatus is to generate the haptic effect indicates at least one of an intensity, frequency, and type of the haptic effect, and wherein the first processor is configured to determine the at least one of the intensity, frequency, and type indicated in the signal based on at least one of a virtual mass, a virtual shape, a virtual size, and a virtual temperature of the virtual object.

In an embodiment, the haptic output device of the haptic accessory apparatus is one of a plurality of haptic output devices of the haptic accessory apparatus, and wherein the signal that is generated by the first processor indicates which one or more haptic output devices of the plurality of haptic output devices is to output the haptic effect.

In an embodiment, the signal further indicates a timing of the haptic effect to be generated by the one or more haptic output devices.

In an embodiment, the application executed by the processor provides the AR environment, and the display device is configured to overlay an image over a physical object in the AR environment, the image having substantially the same shape as the physical object.

One aspect of the embodiments herein relate to a method for providing a virtual reality (VR) or augmented reality (AR) environment, the method performed by a computer system having a first processor and a display device, the method comprising executing, by the first processor of the computer system, an application that provides the VR or AR environment. The method further comprises causing, by the first processor, a virtual object of the VR or AR environment to be displayed on the display device of the computer system. The method further comprises receiving, from a haptic accessory apparatus, sensor information from a motion sensor of the haptic accessory apparatus, wherein the haptic accessory apparatus comprises a conformable body, a haptic output device, the motion sensor, a wireless communication interface unit, a second processor, and a power source, wherein the conformable body is adapted to be attached to a physical object having no handheld controller functionality when detached from the haptic accessory apparatus, wherein each of the haptic output device, the motion sensor, the wireless communication interface unit, the second processor, and the power source is disposed on or in the conformable body. The method further comprises controlling, by the first processor, the virtual object based on the sensor information. The method further comprises determining, by the first processor, that a haptic effect associated with the virtual object is to be generated; and communicating, by the first processor, a signal to the haptic accessory apparatus that indicates the haptic accessory apparatus is to generate the haptic effect, such that the haptic effect is generated at the physical object attached to the haptic accessory apparatus.

In an embodiment, the method further comprises determining that the haptic accessory apparatus is to be attached to the first physical object by: receiving an image captured by a camera in communication with the first processor, determining, from the image captured by the camera, that a shape of the physical object is substantially the same as a shape of the virtual object, and in response to a determination that the shape of the physical object is substantially the same as the shape of the virtual object, outputting on the display device an indication that the haptic accessory apparatus is to be manually attached to the physical object, and associating the haptic accessory apparatus with the physical object in the memory of the computer.

In an embodiment, the conformable body is formed from a flexible material and is configured to conform to a surface of the physical object.

In an embodiment, the conformable body is reconfigurable to conform to different shapes of different physical objects.

In an embodiment, the virtual object is a first virtual object and a second virtual object, and the physical object is a first physical object and a second virtual object of a plurality of physical objects. In the embodiment, the method further comprises causing, by the first processor, the second virtual object to be displayed on the display device of the computer system, detecting, by the first processor, a change from the haptic accessory apparatus being attached to the first physical object to the haptic accessory apparatus being attached to the second physical object, and associating, by the first processor, the second physical object with the second virtual object in the memory of the computer system, wherein the second virtual object is part of the VR or AR environment or is part of a different VR or AR environment.

In an embodiment, the first physical object and the second physical object have different respective shapes.

In an embodiment, the method further comprises receiving, from the haptic accessory apparatus, at least one of a first estimated shape and first estimated size of the first physical object when the haptic accessory apparatus is attached to the first physical object; and receiving, from the haptic accessory apparatus, at least one of a second estimated shape and second estimated size of the second physical object when the haptic accessory apparatus is attached to the second physical object.

In an embodiment, the haptic effect is a first haptic effect, and is determined based on at least one of the first estimated shape and first estimated size of the first physical object when the haptic accessory apparatus is attached to the first physical object, the method further comprising determining a second haptic effect based on at least one of the second estimated shape or second estimated size of the second physical object when the haptic accessory apparatus is attached to the second physical object.

In an embodiment, the method further comprises causing the display device to display movement of the virtual object based on the sensor information received from the haptic accessory apparatus.

Features, objects, and advantages of embodiments hereof will become apparent to those skilled in the art by reading the following detailed description where references will be made to the appended figures.

### BRIEF DESCRIPTION OF THE DRAWINGS

The foregoing and other features, objects and advantages of the invention will be apparent from the following description of embodiments hereof as illustrated in the accompanying drawings. The accompanying drawings, which are incorporated herein and form a part of the specification, further serve to explain the principles of the invention and to enable a person skilled in the pertinent art to make and use the invention. The drawings are not to scale.
FIG. 1 depicts a haptic-enabled system having a haptic accessory apparatus and a computer system, according to an embodiment hereof.
FIG. 2 depicts a haptic-enabled system having a haptic accessory apparatus and a computer system, according to an embodiment hereof.
FIG. 3A depicts a haptic accessory apparatus that has the form of a band, wherein the band forms a loop, according to an embodiment hereof.
FIGS. 3B, 3C, and 3D depict a haptic accessory apparatus that has the form of a sheet, according to an embodiment hereof.
FIG. 4 depicts a block diagram of a haptic accessory apparatus, according to an embodiment hereof.
FIG. 5 illustrates a method for generating a haptic effect with a haptic accessory apparatus, according to an embodiment hereof.
FIGS. 6 and 7 illustrate interaction between a physical object, haptic accessory apparatus, and virtual object, according to an embodiment hereof.
FIG. 8 illustrates steps performed by a computer system in communication with a haptic accessory apparatus, according to an embodiment hereof.

### DETAILED DESCRIPTION

The following detailed description is merely exemplary in nature and is not intended to limit the invention or the application and uses of the invention. Furthermore, there is no intention to be bound by any expressed or implied theory presented in the preceding technical field, background, brief summary or the following detailed description.

Embodiments herein relate to an apparatus that can add haptic functionality and handheld controller functionality to a physical object, which may be an everyday object that itself has no haptic functionality nor handheld controller functionality. The apparatus may thus act as a haptic accessory apparatus that allows different everyday objects to each be configured as a haptic-enabled handheld controller for, e.g., a virtual reality (VR) or augmented reality (AR) environment. In an embodiment, the haptic accessory apparatus may act as a generic apparatus that can configure a variety of different physical objects into a haptic-enabled handheld controller. The haptic accessory apparatus may thus provide customization in terms of the shape or size of a handheld controller, by allowing different physical objects of different respective shapes or sizes to each be configured as a handheld controller. In some instances, the haptic accessory apparatus may provide handheld controller functionality further through one or more motion sensors, which may track motion of the haptic accessory apparatus and of any physical object attached thereto. By being able to configure a variety of different physical objects into a haptic-enabled handheld controller, the haptic accessory apparatus may allow a user or a program (e.g., a program that provides the VR/AR environment) to select a physical object that, e.g., best matches or otherwise best represents a virtual object of the VR/AR environment (e.g., best matches the virtual object in terms of shape, size, or some other factor). In this situation, by being similar to the virtual object, the physical object may act as a proxy for the virtual object in the VR or AR environment. In an embodiment, the physical object is configurable as a handheld controller, in that the physical object has a shape and size that allows the physical object to be held and moved directly by a hand of an average user (e.g., it is sufficiently small to be graspable by a user's hand).

Further, in an embodiment, the haptic accessory apparatus allows a dedicated handheld controller (e.g., a Wii® Remote) to be replaced by a physical object in a user's physical location or surroundings (e.g., home or office), wherein the physical object itself has no controller functionality. The haptic accessory apparatus provides the controller functionality to the physical object once it is attached to the physical object. Once attached to the physical object, the haptic accessory apparatus allows the physical object to be used as a handheld controller (e.g., a game peripheral) that can provide user input for a VR or AR environment. In another embodiment, the physical object may itself have a motion sensing capability, apart from any motion sensing capability provided by the haptic accessory apparatus. For instance, the physical object may be a gaming joystick that includes a motion sensor.

In an embodiment, different physical objects may be used with the haptic accessory apparatus to control or more generally interact with different respective virtual objects. The particular physical object to be used to interact with a particular virtual object may be selected by a computer system that is executing the VR or AR environment, or by a user. In both cases, the computer system may map the virtual object to the physical object by, e.g., associating (e.g., in a table in memory) the virtual object with the physical object. For instance, the computer system may execute a VR or AR environment in which a user can have a simulated sword fight using a virtual sword or virtual light saber. In such an example, the computer system or the user may select, e.g., a cylindrical chip container (e.g., a Pringles® potato chip can) as a physical proxy for the virtual sword or virtual light saber, because the cylindrical chip container may have an elongated shape, which is similar to an elongated form of a virtual sword or virtual light saber, and because the cylindrical chip container also has a cylindrical shape, which is similar to that of a sword handle. In another example, the computer system or the user may select, e.g., a tennis racket as a physical proxy for the virtual sword or virtual light saber. The user may control the virtual sword or virtual light saber in the VR or AR environment by, e.g., swinging the cylindrical chip container or the tennis racket in the physical location. During gameplay, if the user moves the physical object, the VR or AR environment may display movement of the virtual sword or light saber in a corresponding manner. In an embodiment, if the virtual sword or virtual light saber hits another virtual object, such as another virtual sword or a virtual wall, the haptic accessory apparatus may be configured to output a haptic effect on the physical object, such as a vibrotactile haptic effect on the cylindrical chip container. The haptic effect may provide the functionality of simulating the contact between the user's virtual sword or light saber and another virtual object(s) in the VR or AR environment.

In an embodiment, the user may attach the haptic accessory apparatus to a physical object before or when a VR or AR environment is initially displayed or otherwise rendered. In an embodiment, a computer system executing the VR or AR environment may be configured to capture an image(s) of the physical location or surroundings of the computer system and to use an image processing algorithm to identify one or more physical objects (e.g., one or more physical objects that are configurable as a handheld controller) in the physical location or surroundings. The computer system may select, from among the one or more physical objects, a physical object as a proxy for a virtual object has been or is about to be rendered. The selection may be based on, e.g., which of the one or more physical objects most closely matches the virtual object in terms of shape and/or size. In an embodiment, the computer system may output an indication that a particular physical object has been selected as a proxy for a virtual object. For instance, it may display, in an image of the physical location or surroundings, a marker next to the physical object so as to identify the physical object as the selected proxy. When a user sees or otherwise perceives the indication, the user may then attach the haptic accessory apparatus to the physical object identified by the computer system.

In another embodiment, a user may select a particular physical object as a proxy for a virtual object, without involvement from the computer system. For instance, the user may decide that the cylindrical chip container should be used as a proxy for a virtual sword that has been or is to be rendered by the VR or AR environment. In that scenario, the user may first present the physical object to a camera that is part of the computer system or in communication with the computer system. The camera may capture an image of the physical object, which may allow the computer system to associate the physical object with a virtual object of the VR or AR environment. This association may involve, e.g., a table in memory that associates an identifier of the virtual object (e.g., a virtual object ID) with an image of the physical object (or with a physical object ID assigned thereto by the computer system). In an embodiment, if a user has selected a particular physical object as a proxy for a virtual object, the user may attach the haptic accessory apparatus to the physical object, without being instructed to by the computer system. The computer system may be configured to, e.g., capture an image of a physical location or the surroundings of the computer system, and may be configured to identify, from the image, the haptic accessory apparatus and any physical object that is attached to or otherwise in contact with the haptic accessory apparatus. The computer system may be configured to determine that the physical object attached to the haptic accessory apparatus has been selected by the user as a proxy of a virtual object of the VR or AR environment, and to associate that physical object with the virtual object.

In another example, the VR or AR environment may be a three-dimensional (3D) Tetris® game that involves virtual blocks. In this example, the computer system or the user may select a physical tissue box as a proxy for one of the virtual blocks. The haptic accessory apparatus may be attached to the physical tissue box by the user. In an embodiment, the computer system may associate the physical tissue box with that virtual block. In an embodiment, a user may control movement of the virtual block in the VR or AR environment may by moving the physical tissue box. For instance, to lower the virtual block to a virtual ground level of the Tetris® game, the user may lower the physical tissue box to a kitchen table, or to a floor, in the user's home. Further, the haptic accessory apparatus may add haptic functionality to the physical tissue box. For instance, when the virtual block comes into contact with another virtual block or with the virtual ground level, such an event may trigger the haptic accessory apparatus to output a vibrotactile haptic effect on or at the physical tissue box that is felt by the user. Such a haptic effect can simulate the virtual block coming into contact with another virtual block or with the virtual floor level.

In another example, the VR or AR environment may be part of a whack-a-mole game involving using a virtual hammer to hit virtual moles. In this example, the computer system or the user may select a physical TV remote as a proxy for the virtual hammer. The haptic accessory apparatus may be attached to the physical TV remote by the user. In an embodiment, the computer system may associate the physical TV remote with the virtual hammer. In an embodiment, a user may control movement of the virtual hammer in the VR or AR environment by moving the physical TV remote. In the VR or AR environment, when the virtual hammer hits a virtual mole, the haptic accessory apparatus may be triggered to output, e.g., a vibrotactile haptic effect on or at the physical TV remote that is felt by the user. Such a haptic effect may simulate collision between the virtual hammer and the virtual mole. In an embodiment, the VR or AR environment may have one or more virtual moles that is not associated by the computer system with any physical object. In another embodiment, the one or more virtual moles may be associated with one or more respective physical objects. For instance, one of the virtual moles may be associated with a physical stapler. When the VR or AR environment determines to display the virtual mole popping out of a virtual hole in the whack-a-mole game, the location at which the virtual mole is displayed to pop out on a display device may correspond to a physical location of the physical stapler. In some instances, the physical stapler may be attached to a second haptic accessory apparatus. In an embodiment, the haptic accessory apparatus may be configured to output, e.g., an electrostatic friction (ESF) effect to simulate a texture, such as texture of hair on the virtual mole. In this embodiment, the user may be able to reach out toward the virtual mole in the VR or AR environment, and may touch the physical stapler and the second haptic accessory apparatus that is attached thereto. The second haptic accessory apparatus may simulate texture of the mole hair, and thus simulate contact with the virtual mole or other virtual object.

In an embodiment, the computer system executing the VR or AR environment may track movement of the physical object by receiving motion sensor information from a motion sensor that is part of the haptic accessory apparatus. The haptic accessory apparatus and its motion sensor may move together with the physical object after the haptic accessory apparatus is attached to the physical object. In an embodiment, the computer system executing the VR or AR environment may track movement of the physical object based on performing image recognition. More specifically, the computer system may include or be in communication with a camera, which may capture an image or series of images (e.g., a video) of the physical object. The computer system may track movement of the physical object based on the captured image or series of images.

In an embodiment, the computer system of the AR or VR environment may select a physical object based on a determination that the physical object is configurable as a handheld controller (e.g., the computer system determines that it is sufficiently small to be held by an average-sized hand) and a determination that a shape of the physical object is substantially the same as a shape of the virtual object. The shape of the virtual object may refer to when the virtual object is displayed in the VR or AR environment, such as on a VR head-mounted device or on a screen of a desktop computer. For an AR environment, the computer system may overlay an image of the virtual object on an image of the physical object on a display device, so that a user may see the virtual object instead of the physical object (e.g., an image of the virtual sword is overlaid on an image of the cylindrical chip container). When the user moves or otherwise manipulates the physical object, the VR or AR environment may update an image of the virtual object. In accordance with embodiments hereof, the overlaying of an image of a virtual object on a captured image of a physical object in an AR environment may be most effective when the physical object has a shape that substantially matches a shape of the virtual object.

In an embodiment, the haptic accessory apparatus may have a conformable body that can conform to different shapes of different respective physical objects, such as everyday objects found in a user's home or office. In an embodiment, the haptic accessory apparatus may be a self-contained device that is used to provide handheld controller functionality and/or haptic functionality to such everyday objects, which may themselves have no such functionality. To provide such functionality, the haptic accessory apparatus may include, e.g., a motion sensor, a haptic output device, a communication interface, a processor, and a power source. In some instances, the conformable body may have the form of a flexible layer (also referred to as a flexible sheet) that includes the components recited above. The flexible layer may, for example, be able to be wrapped around a surface of the physical object. In some instances, the flexible layer may be made from an elastomeric material that can be stretched over/around the surface of the physical object.

In an embodiment, the haptic accessory apparatus can be equipped with a single haptic output device (e.g., single haptic actuator) or multiple haptic output devices (e.g., multiple haptic actuators). The multiple haptic output devices may provide the same type of haptic effect (e.g. vibrotactile effect) or different types of haptic effects (e.g. thermal, ESF, vibrotactile, etc.). In an embodiment, a body of the haptic accessory apparatus may be sufficiently flexible to allow to be wrapped at least partially around a physical object, or may be rigid. In the embodiment, a VR/AR engine of the VR/AR environment may output a recommendation to the user on how the haptic accessory apparatus is to be attached to the physical object. This recommendation can be designed in advance by a haptic effect designer or can be estimated automatically by the VR/AR engine itself. The estimate may be based on the number of haptic output devices, a shape (or, more generally, geometry) of the haptic accessory apparatus, and a shape (or, more generally, geometry) of the physical object. The shape of the haptic accessory apparatus and physical object may be determined with a camera, or the haptic accessory apparatus can provide information to the VR/AR engine about characteristics of the haptic accessory apparatus (e.g. shape, layout of haptic output devices, number of haptic output devices, type of haptic output devices, other properties of the haptic output devices, etc.).

In an embodiment, a haptic accessory apparatus and a computer system may be paired (e.g., via Bluetooth® pairing), in which the haptic accessory apparatus is informed of the presence of the computer system, and the computer system is informed of the presence of the haptic accessory apparatus. In an embodiment, the pairing may involve the haptic accessory apparatus providing information (e.g., number and type of haptic output devices) about itself to the computer system, or vice versa. Upon pairing, the VR or AR engine may select which haptic effect to generate, which haptic output device to use to generate the haptic effect, or a combination thereof. The VR or AR engine may further provide a recommendation on how the haptic accessory apparatus is to be attached, and output the recommendation to a user. The VR or AR engine can further decide to merge and mix some effects and play them on specific haptic output devices, or on specific haptic accessory apparatuses, or a combination thereof, for a single physical object.

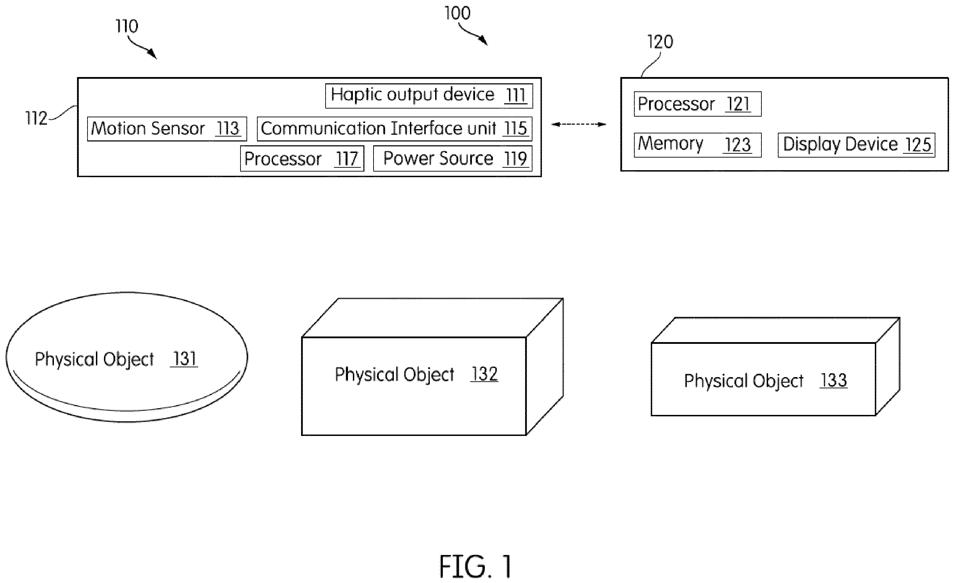

FIG. 1 illustrates a haptic-enabled system 100 for providing an augmented reality (AR) or virtual reality (VR) environment according to an embodiment herein. The haptic-enabled system 100 of FIG. 1 may include a computer system 120 configured to provide the AR or VR environment, and a haptic accessory apparatus 110. The haptic accessory apparatus 110 may be attachable to various physical objects in a user's surroundings or physical location, including a physical object 131, physical object 132, and physical object 133.

In an embodiment, the computer system 120 may be a desktop computer, a game console (e.g., a Playstation® or Wii® console), a server, a laptop, a tablet computer or even a mobile phone. In an embodiment, the computer system 120 may include a processor 121, memory 123, and a display device 125. In an embodiment, the processor 121, memory 123, and display device 125 may be integrated into a single device, such as a tablet computer configured to provide an AR gaming environment, or as a mobile phone that can provide a VR environment for a VR head set (e.g., Samsung Gear® VR headset or other head-mounted device (HMD)). In an embodiment, the computer system 120 may include only a HMD configured to provide a VR or AR environment. In such an embodiment, the HMD may have sufficient processing power to execute a VR or AR engine without needing a separate desktop computer or server. In an embodiment, the processor 121, memory 123, and display device 125 of the computer system 120 may be part of different discrete devices. For instance, the processor 121 and the memory 123 may be part of a desktop computer that is configured to generate a VR or AR environment, while the display device 125 is a separate device (e.g., a standalone LED monitor or HoloLens®) in communication with the desktop computer (e.g., via a data cable). In an embodiment, the memory 123 may be a non-transitory computer-readable medium having computer-readable instructions for a VR or AR application stored thereon. In an embodiment, the processor 121 may be configured to execute the VR or AR application by executing the computer-readable instructions.

In an embodiment, the haptic accessory apparatus 110 may include a conformable body 112, a haptic output device 111, a motion sensor 113, a communication interface unit 115, a processor 117, and a power source 119. Each of the recited components may be disposed on (e.g., attached to) a surface of the conformable body 112, or disposed in (e.g., embedded within) the conformable body 112. The conformable body 112 may be adapted to be reconfigurable to conform to different shapes of different respective physical objects, such as physical objects 131, 132, 133. For instance, the conformable body 112 may comprise a flexible material (e.g., flexible polymeric material) that can conform to various shapes. In some cases, if the flexible material is manipulated to a particular shape, it may be able to hold that shape until a user manipulates the flexible material into another shape. In an embodiment, the conformable body 112 may encapsulate the haptic output device 111, motion sensor 113, communication interface unit 115, processor 117, and power source 119. For instance, if the conformable body 112 is formed from the flexible material, the above-recited components may be embedded in the flexible material. In an embodiment, the conformable body may be made from an elastomeric material (e.g., rubber) that can be stretched to conform to surfaces of different shapes. In an embodiment, the elastomeric material may allow the conformable body 112 to be reconfigurable to conform to different shapes of different respective physical objects. For instance, if the conformable body 112 is wrapped around the first physical object 131, the conformable body 112 may, if it is elastic, also be reconfigurable to later be wrapped around the second physical object 132 or the third physical object 133 that have different shapes. In another embodiment, the haptic accessory apparatus 110 may be attached to (e.g., wrapped around) a user's body. For instance, the conformable body 112 may be wrapped around a user's wrist.

In an embodiment, the haptic output device 111 may be, e.g., a vibrotactile actuator (e.g., a piezoelectric actuator) configured to output a vibrotactile haptic effect, an electrostatic friction (ESF) haptic output device configured to output an ESF haptic effect (e.g., to simulate a texture), a thermal haptic output device, an ultrasound haptic output device, any other haptic output device, or a combination thereof. In an embodiment, any vibrotactile actuator of the apparatus 110 may include a piezoelectric actuator, an electromagnet actuator, a linear resonant actuator (LRA), or any other vibrotactile actuator. Further, any vibrotactile actuator of the haptic accessory apparatus 110 may be disposed within (e.g., embedded in) the conformable body 112. In an embodiment, any ESF haptic output device may be disposed on a surface of the conformable body 112. Such an ESF haptic output device may include, e.g., one or more electrodes disposed on the surface of the conformable body 112. In an embodiment, the haptic output device 111 may include a motor or other actuator that is configured to provide a kinesthetic haptic effect. In an embodiment, the haptic output device 111 may include a smart material actuator (e.g., an electroactive polymer (EAP) actuator) that is configured to output a static or low-frequency haptic effect. In an embodiment, the haptic output device 111 may be an ultrasound haptic actuator, a thermal generator, or a combination thereof. While FIG. 1 illustrates a haptic accessory apparatus 110 having a single haptic output device 111, other embodiments may involve a haptic accessory apparatus that includes multiple haptic output devices disposed at different locations on or within the conformable body of the haptic accessory apparatus.

In an embodiment, the motion sensor 113 may be configured to track motion of the haptic accessory apparatus 110. In an embodiment, the sensor 113 may include an accelerometer, a gyroscope, pressure sensor, inertial measurement unit (IMU), or any combination thereof. In an embodiment, the motion sensor 113 may be configured to measure at least one of speed, velocity (which indicates speed and direction of movement), rate of acceleration, or orientation of the haptic accessory apparatus 110. In an embodiment, a measurement of velocity may include rotational velocity (e.g., rate and direction of rotation), lateral velocity, or a combination thereof. When the haptic accessory apparatus 110 is attached to a physical object (e.g., physical object 131), the motion sensor 113 may also be measuring at least one of speed, direction of movement, rate of acceleration, or orientation of the physical object. In an embodiment, the motion sensor 113 may provide raw sensor information as the motion sensor information, directly to the communication interface unit 115, which may communicate the sensor information to another device of the haptic-enabled system 100. In an embodiment, the motion sensor 113 may provide the raw sensor information to the processor 117, which may process the raw sensor information to generate processed sensor information. The processor 117 may then provide the processed sensor information to the communication interface unit 115, which may then communicate the processed sensor information as motion sensor information to another device. In an embodiment, the processor 117 of the haptic accessory apparatus 110 or the processor 121 of the computer system 120 may be configured to determine a position of the haptic accessory apparatus 110 based on motion sensor information. For instance, the processor 117 of the haptic accessory apparatus 110 or the processor 117 of the computer system 120 may be configured to obtain velocity data from the motion sensor information, and calculate an integral of the velocity data (the term data and information are being used interchangeably with respect to an output of the motion sensor 113). The calculated integral may represent a cumulative motion of the haptic accessory apparatus. The processor 117 of the haptic accessory apparatus 110 or the processor 121 of the computer system 120 may add the cumulative motion with an initial position of the haptic accessory apparatus 110 to determine a current position of the haptic accessory apparatus 110. The processor 121 may cause the display device 125 to change a displayed position (or displayed orientation) of the virtual object based on the sensor information.

In an embodiment, the communication interface unit 115 may be configured to communicate with the computer system 120. The information being communicated may include, e.g., sensor information from the motion sensor 113 of the haptic accessory apparatus 110 to the computer system 120, or include one or more signals (e.g., command signals) from the computer system 120 to the haptic accessory apparatus 110, or any other information. The sensor information from the motion sensor may include raw sensor information directly from the motion sensor 113, or may include processed sensor information generated by the processor 117, if the haptic accessory apparatus 110 uses the processor 117 to process (e.g., filter) the raw sensor information. The signals communicated from the computer system 120 may include, e.g., a haptic command that indicates that the haptic accessory apparatus 110 is to output a haptic effect. The haptic accessory apparatus 110 may then cause its haptic output device 111 to output a haptic effect based on the signal. For instance, if the haptic output device 111 is an ESF actuator, it may be configured to simulate a texture based on the signal from the computer system 120. If the haptic actuator 111 is a piezoelectric actuator, it may be configured to output a vibrotactile haptic effect based on the signal from the computer system 120.

In an embodiment, the communication between the haptic accessory apparatus 110 and the computer system 120 may be over a wired interface. For instance, the communication interface unit 115 and the computer system 120 may communicate over a universal serial bus (USB) interface. In an embodiment, the communication may be over a wireless interface. For instance, the communication interface unit 115 may be a wireless communication interface unit that is configured to communicate with the computer system 120 using a wireless communication protocol such as IEEE 802.11, Bluetooth®, or any other wireless communication protocol.

In an embodiment, the communication interface unit 115 may be used to perform a pairing process (e.g., Bluetooth®) for pairing with the computer system 120. The pairing may allow the haptic accessory apparatus 110 and the computer system 120 to become aware of the presence of the other device. In some instances, the pairing may involve an exchange or reporting of information. For instance, the communication interface unit 115 may report to the computer system 120 a number of haptic output devices included in the apparatus 110, the types of haptic output devices included in the apparatus 110, a location or locations of the haptic output devices on the apparatus 110, other information on the haptic accessory apparatus 110, or any combination thereof.

In an embodiment, the processor 117 may be configured to process raw sensor information from the motion sensor 113, as discussed above. In an embodiment, the processor 117 may be configured to control the haptic output device 111. For instance, the processor 117 may be configured to receive a command from the computer system 120 to output a haptic effect, wherein the command may specify a parameter value of the haptic effect, such as start time, duration, amplitude, or frequency. The processor 117 may be configured to generate a driving signal for the haptic output device 111 based on the command from the computer system 120. In an embodiment, the processor 117 may be a microprocessor, a field programmable gate array (FPGA), a programmable logic array (PLA), or any other processing circuit.

In an embodiment, the power source 119 may be configured to provide power to at least the haptic output device 111, the processor 117, and the communication interface unit 115. In an embodiment, the power source 119 may further provide power to the motion sensor 113. In an embodiment, the motion sensor 113 may be a mechanical sensor that operates without input of power. In an embodiment, the power source 119 may be a battery, a charging unit, a power generator, or any combination thereof. The charging unit may include, e.g., an inductive or other wireless charging unit. In an embodiment in which the power source 119 utilizes a power generator, the power generator may be configured to, e.g., generate power from motion of the haptic accessory apparatus, from body heat of a user, or from some other source.

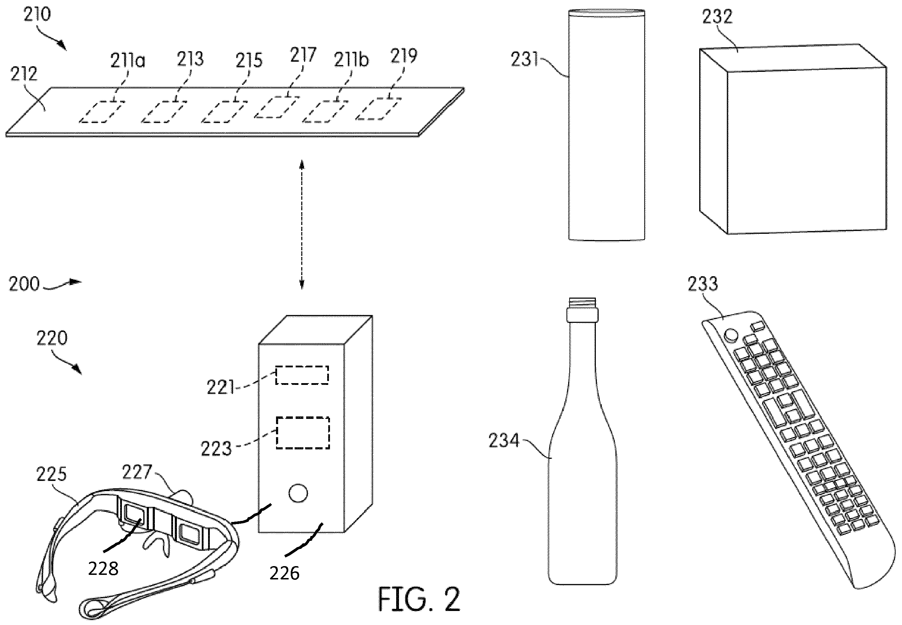

As stated above, the conformable body 112 may be adapted to be reconfigurable to conform to different shapes of different respective physical objects 131, 132, 133. In an embodiment, the physical objects 131, 132, 133 may be everyday objects in a user's home or office, and may have different respective shapes (e.g., spherical shapes, polygonal shapes, cylindrical shapes), different respective sizes, or a combination thereof. In an embodiment, the physical objects 131, 132, 133 may be special purpose physical objects having a basic geometrical shape, such as a spherical shape, cubic shape, or cylindrical shape. The conformable body 112 may be reusable and reconfigurable in the sense that the conformable body has a structure that can adapt to each of a shape of physical object 131, a shape of physical object 132, and a shape of physical object 133. FIG. 2 provides a more specific example of a haptic accessory apparatus 210 with a conformable body 212, and of physical objects 231, 232, 233, 234 to which the conformable body 212 can adapt.

More specifically, FIG. 2 illustrates a haptic-enabled system 200 having a haptic accessory apparatus 210 and a computer system 220. In an embodiment, the haptic accessory apparatus 210 has two haptic output devices 211a, 211b, a motion sensor 213, a wireless communication interface unit 215, a processor 217, and a power source 219. In an embodiment, the two haptic output devices 211a, 211b may be different types of haptic output devices. For instance, haptic output device 211a may be a vibrotactile piezoelectric actuator, while haptic output device 211b may be an ESF device. In an embodiment, the haptic output devices 211a, 211b may be the same type of haptic output device. In an embodiment, the above-recited components are embedded in a conformable body 212 that is adapted to conform to physical objects such that the physical object may then be converted to/usable as a handheld controller. The physical objects may include a first physical object 231 that is an elongated cylindrical container (e.g., a Pringles® can), a second physical object 232 that is a rectangular box (e.g., a tissue box), a third physical object 233 that is TV remote controller, and a fourth physical object 234 that is a wine bottle. In an embodiment, the conformable body 212 is formed from a flexible material, such as a plastic or other polymeric material. In an embodiment, the flexible material may be formed as a flexible layer (also referred to as a flexible sheet). In an embodiment, the physical objects 231, 232, 233, 234 to which the conformable body 212 of the haptic accessory apparatus 210 are adaptable to be, or are, handheld objects.

In an embodiment, the conformable body 212 may be attached to one of the physical objects 231, 232, 233, 234 by being wrapped around the physical object. In other words, the conformable body 212 may be wrapable around at least a portion of a surface of each of the physical objects 231, 232, 233, 234. For instance, the flexible material forming the conformable body 212 may comprise an elastomeric material that is able to be elastically stretched to fit around at least a portion of any of the physical objects 231, 232, 233, 234, such that the elastomeric material is wrapped around at least a portion of any of the physical objects. As discussed below, the conformable body 212 may in an example form an elastic band that can be stretched around at least a portion of any of the physical objects 231, 232, 233, 234. In an embodiment, the haptic accessory apparatus 210 may include a fastener configured to secure the wrapped conformable body 212 of the haptic accessory apparatus 210 around any of the physical objects 231, 232, 233, 234 and thus attached to the physical objects 231, 232, 233, 234. In accordance with embodiments hereof, corresponding portions of a fastener may be attached solely to the haptic accessory apparatus or may be attached to each of the haptic accessory apparatus and to one of the physical objects 231, 232, 233, 234 to which it is to be secured. In an embodiment, the fastener may include hook and loop fasteners (e.g., Velcro® fasteners) disposed at opposite ends of the conformable body 212, and used to keep the conformable body 212 in a loop configuration when the conformable body 210 has been wrapped around at least a portion of one of the physical objects 231, 232, 233, 234.

In an embodiment, none of the physical objects 231, 232, 233, 234 have any handheld controller functionality or haptic functionality when the haptic accessory apparatus 210 is detached from those physical objects 231, 232, 233, 234. In an embodiment, the handheld controller functionality may include sensing user input (e.g., a motion-based gesture), communicating with a computer system that is executing a VR or AR environment, or any other handheld controller functionality. In an embodiment, the haptic functionality may include outputting of a haptic effect. In another embodiment, one or more of the physical objects 231, 232, 233, 234 may have controller functionality and/or haptic functionality, even when the haptic accessory apparatus 210 is detached from those physical objects 231, 232, 233, 234. For instance, one or more of the physical objects 231, 232, 233, or 234 may be a game controller that has a first type of haptic output device (e.g., a eccentric rotating mass or linear resonating actuator), while the haptic accessory apparatus 210 may have a second type of haptic actuator (e.g., an electrostatic haptic output device or thermal haptic output device). In such an embodiment, the haptic accessory apparatus may thus enhance the game controller by being able to generate a type of haptic effect that the game controller is unable to on its own.

In an embodiment, the haptic accessory apparatus 210 may be a physical package that includes components for performing such handheld controller functionality and haptic functionality. For instance, as previously stated above, the haptic accessory apparatus 210 may have the haptic output devices 211a, 211b configured to output haptic effects, the motion sensor 213 configured to sense a motion-based gesture or any other form of user input, a wireless communication interface unit 215 configured to communicate with the computer system 220, the processor 217 configured to control the other components of the haptic accessory apparatus 210 (e.g., control the haptic output devices 211a, 211b), and the power source 219 configured to provide power to the other components of the apparatus 210. The components may all be embedded in the conformable body 212 (e.g., a sheet of elastomeric material, such as rubber) of the haptic accessory apparatus 210. The haptic accessory apparatus 210 can thus be used to convert, or repurpose, each of the physical objects 231, 232, 233 to a haptic-enabled handheld controller when the haptic accessory apparatus 210 is attached to the respective physical object.

In an embodiment, the computer system 220 that is configured to provide a VR or AR environment may have a processor 221, a memory 223, and a head-mounted display (HMD) device 225. In an embodiment, the processor 221 and the memory 223 may be part of a desktop computer 226, while the HMD device 225 may be a separate device that communicates with the processor 221 via a wired interface (or, in another embodiment, via a wireless interface). The HMD device 225 may include a display component 228 for displaying a VR or AR environment. In an embodiment, the computer system 220 may include a camera 227 that is in communication with the processor 221, and configured to capture an image of a physical location or the surroundings of the camera 227. In an embodiment, the camera 227 may be part of a display device, such as part of the HMD device 225. In such an embodiment, when the user is wearing the HMD device 225, the camera 227 may be configured to capture an image of a physical location or the surroundings in front of the user. In another embodiment, the camera 227 may be separate a separate device from the HMD device 225 and from the desktop computer. In an embodiment, the camera 227 may be a webcam.

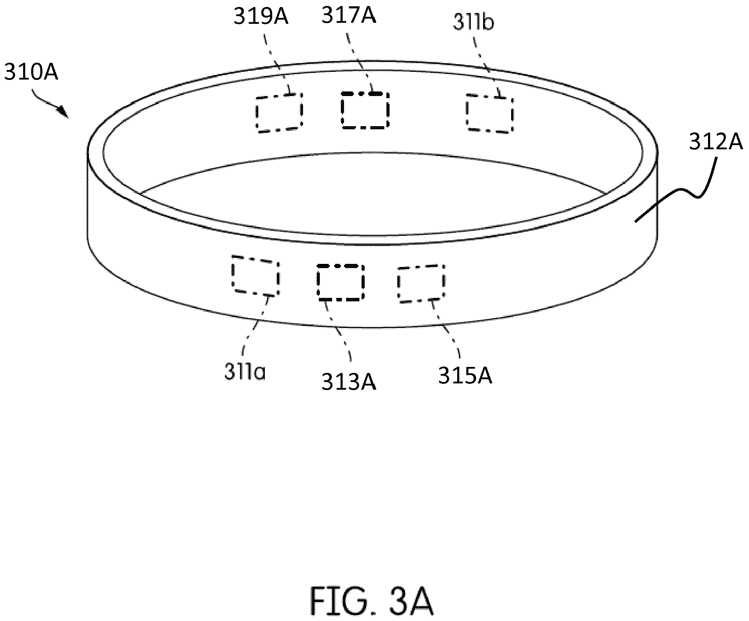

As stated above, the haptic accessory apparatus 210 may in an embodiment have a conformable body in the form of an elastic band, as shown in FIG. 3A. For instance, FIG. 3A illustrates a haptic accessory apparatus 310A that utilizes the elastic band 312A forming a loop. The loop-shape elastic band 312A may be stretched to fit around a particular physical object, so as to be attached to the physical object. Further, the elastomeric material forming the loop-shape elastic band 312A may allow the loop-shape elastic band 312A to fit around different objects of different shapes or sizes, such as the physical objects 231, 232, 233, 234 in FIG. 2. As further illustrated in FIG. 3A, the haptic accessory apparatus 310A may include haptic output devices 311a, 311b, a motion sensor 313A, a wireless communication interface unit 315A, a processor 317A, and a power source 319A disposed within or on the loop-shape elastic band 312A. These components may be similar to the haptic output devices 211a, 211b, motion sensor 213, wireless communication interface unit 215, processor 217, and power source 219 described above.

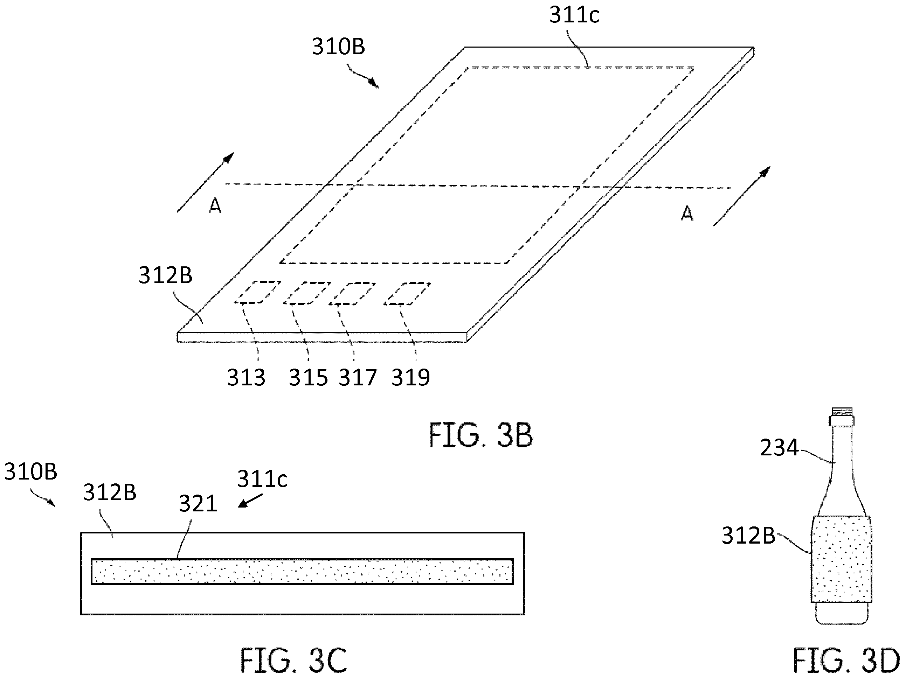

In another embodiment, FIG. 3B illustrates a haptic accessory apparatus 310B that has a conformable body 312B in the form of a flexible sheet. The conformable body 312B may be formed from a flexible material such as a flexible polymer. The conformable body 312B may be wrappable around a physical object. For instance, FIG. 3D illustrates the conformable body 312B being wrapped around the wine bottle 234.

In an embodiment, the haptic accessory apparatus 310B may have a haptic output device 311c includes an electrode 321 and an insulating layer disposed over the electrode 321, wherein the haptic output device 311c is configured to generate an electrostatic friction (ESF) effect. The electrode 321 may be embedded within the conformable body 312B, as illustrated in FIG. 3C, which shows a sectional view along the line A-A in FIG. 3B. In some instances, part of the conformable body 312B may form the insulating layer disposed over the electrode 321. In an embodiment, the apparatus 310B includes a processor 317 that may cause a power source 319 to output a sinusoidal driving signal to the haptic output device 311c. When the sinusoidal driving signal is applied to the haptic output device 311c, it may be perceived as a simulated texture. In an embodiment, the haptic accessory apparatus 310B may further include a motion sensor 313 and communication interface unit 315. In an embodiment, the components 311c, 313, 315, 317 and 319 may be embedded within the conformable body 312B.

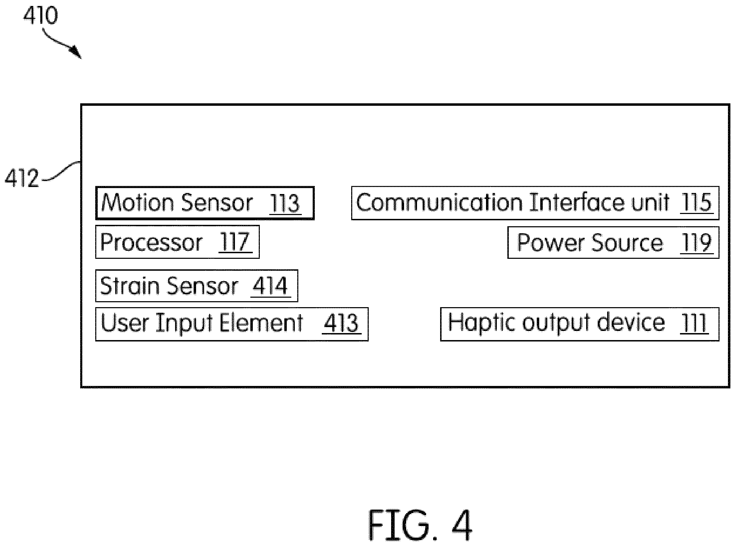

FIG. 4 illustrates another embodiment of a haptic accessory apparatus 410 that has the components of the haptic accessory apparatus 110 illustrated in FIG. 1 (the haptic output device 111, motion sensor 113, communication interface unit 115, processor 117, and power source 119), and further has a user input element 413 and a strain sensor 414. In an embodiment, the user input element 413 may include one or more of a button, a trigger, a manipulandum (e.g., joystick or thumbstick), or a combination thereof. In an embodiment, the haptic output device 111 may be an actuator that is able to exert an actuation force on the user input element 413, in order to provide a kinesthetic haptic effect on the user input element 413. In an embodiment, the haptic output device may be a vibrotactile actuator configured to provide a vibrotactile haptic effect at the user input element 413. In an embodiment, the haptic accessory apparatus 410 may have a conformable body 412. The user input element 416 may be attached to a surface of the conformable body 412 by, e.g., being adhered to the surface of the conformable body 412.

In an embodiment, the haptic accessory apparatus 410 may include a strain sensor 414 configured to sense at least one of stretching and bending of the conformable body 412 of the haptic accessory apparatus 410. The strain sensor 414 may be, e.g., a strain gauge adhered to a surface of the conformable body 412 (or, more generally, disposed on the surface of the body 412), or embedded within (or, more generally, disposed in) the conformable body 412. In an embodiment, the processor 117 of the haptic accessory apparatus 410 may be configured to receive strain data from the strain sensor 414 and to determine, based on the strain data, at least one of an estimated size and estimated shape of a physical object to which the haptic accessory apparatus 410 is attached. For instance, the processor 117 may determine an estimated size of the physical object based on an amount of stretching measured by the strain sensor 414, wherein a greater amount of stretching of the conformable body 412 (and thus a greater amount of strain) may correlate with a greater size of the physical object to which the haptic accessory apparatus 410 is attached. In an embodiment, the processor 117 may cause the estimated size or estimated shape of the physical object to be communicated to a computer system (e.g., 120) providing a VR or AR environment. The computer system may control a virtual object based on an estimated size or estimated shape of the virtual object, and may determine parameter values for a haptic effect (e.g., duration, amplitude, frequency, start time, type, etc.) based on the estimated size or estimated shape of the physical object. In an embodiment, the haptic accessory apparatus 410 may include a temperature sensor, and the computer system 120 may also or additionally base the parameter values of the haptic effect on a temperature of the physical object, as measured by the temperature sensor. In an embodiment, the computer system 120 or 220 may additionally or alternatively base the parameter values of the haptic effect on an input received at the user input element 413 of the haptic accessory device 410, on a motion gesture being tracked by the motion sensor 113, or more generally on an action being taken by the user.

In an embodiment, the haptic accessory apparatus 410 may include additional sensors (e.g., additional strain sensors) that are placed at different parts of the conformable body 412. The processor 117 may be configured to receive strain data from each of the plurality of additional sensors, and to determine, e.g., an estimated shape of a physical object around which the conformable body 412 is wrapped based on the strain data from the plurality of additional sensors.

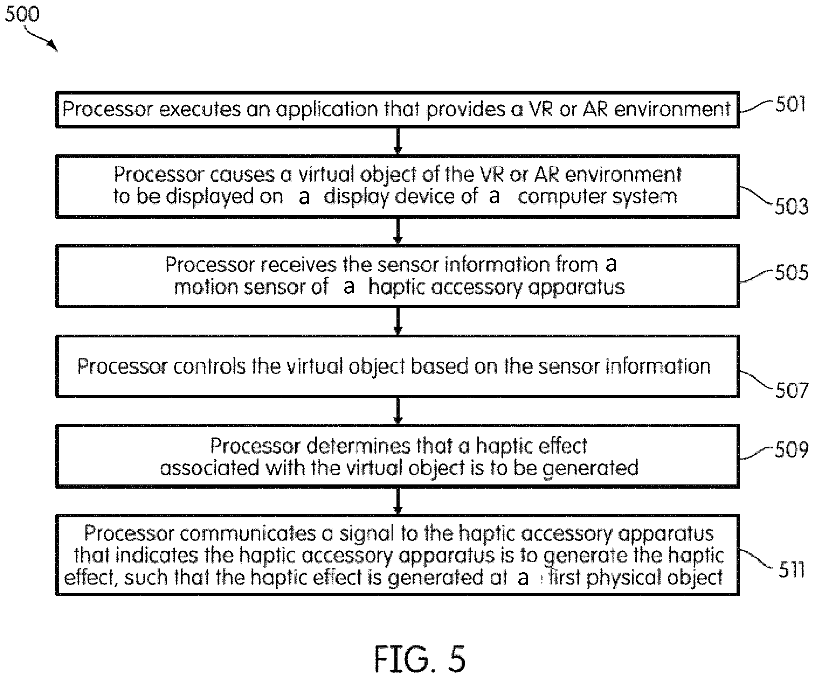

FIG. 5 illustrates a flow diagram of an example method 500 for providing a VR or AR environment, and may be performed by, e.g., processor 121/221 of computer system 120/220. In an embodiment, method 500 begins at step 501, in which the processor 121/221 executes an application that provides the VR or AR environment. For instance, the application may be a game application, such as the virtual sword fighting game, the 3D Tetris® game, or the whack-a-mole game discussed above, or some other game (e.g., Pokemon Go®). In an embodiment, the application may be a visual or graphic design application. In an embodiment, step 501 may involve the processor 121/221 executing instructions stored on a non-transitory computer readable medium, such as memory 123/223. In an embodiment, the instructions may be instructions for an AR or VR engine.

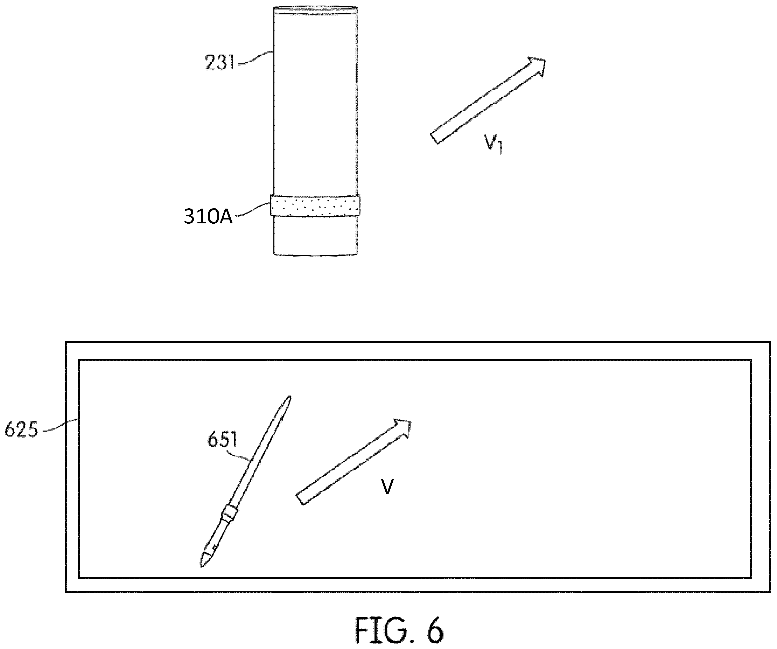

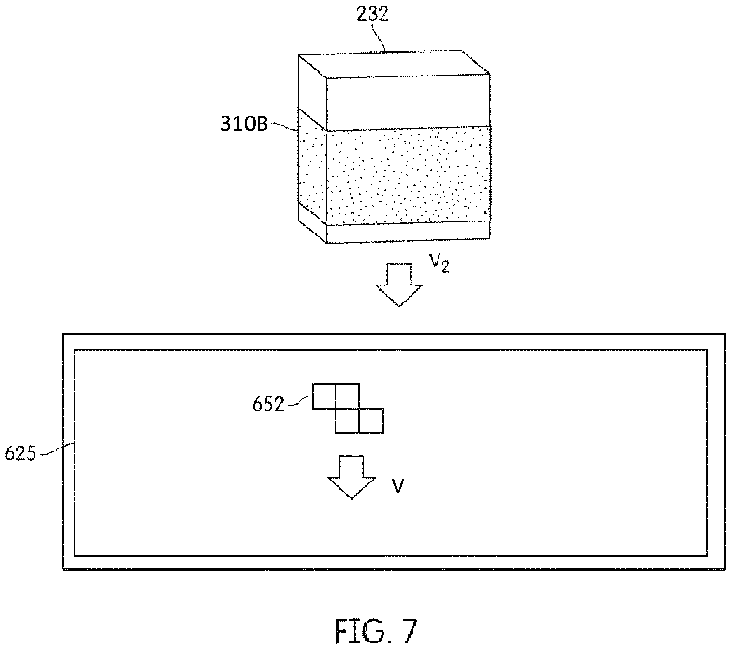

In step 503, the processor 121/221 causes a virtual object of the VR or AR environment to be displayed on a display device of a computer system. For instance, the processor 121/221 may cause the virtual object to be displayed on the display device 125/225 of computer system 100/200. Another display device 625 is illustrated in FIGS. 6 and 7, in which a virtual object 651 (a virtual light saber) and a virtual object 652 (a virtual Tetris® tile) are displayed on the display device 625. The display device 625 may be, e.g., a HMD device, or a desktop or laptop display device (e.g., a LED screen), and may further be part of a computer system, such as a gaming system. Step 503 may be performed before, during, or after the attachment of a haptic accessory apparatus (e.g., 110/210/310A/310B/410) to a physical object, which is discussed in more detail below.

Returning to FIG. 5, in step 505, the processor 121/221 receives sensor information from a motion sensor 113/213/313/313A of a haptic accessory apparatus 110/210/310A/310B/410. The haptic accessory apparatus 110/210/310A/310B/410 may be attached to a physical object (e.g., 131/132/133/231/232/233/234). The haptic accessory apparatus 110/210/310A/310B/410 may include a conformable body 112/212/312A/312B, a haptic output device 111a-b/211a-b/311a-c, the motion sensor 113/213/313/313A, a wireless communication interface unit 115/215/315/315A, a processor 117/217/317/317A, and a power source 119/219/319/319A. As stated above, the conformable body is adapted to be reconfigurable to conform to different shapes of different respective physical objects. In an embodiment, each of the haptic output device 111a-b/211a-b/311a-c, the motion sensor 113/213/313/313A, the wireless communication interface unit 115/215/315/315A, the processor 117/217/317/317A, and the power source 119/219/319/319A may be disposed on or in (e.g., embedded in) the conformable body 112/212/312A/312B. Further, the conformable body may be detachable from each of the physical objects. For instance, FIGS. 6 and 7 illustrate the haptic accessory apparatuses 310A and 310B, each of which has a conformable body (e.g., 312A, 312B) that is able to conform to the physical object 231 of FIG. 6, and/or to the physical object 232 of FIG. 7. Further, the haptic accessory apparatus 310A/310B can be attached to one physical object (e.g., 231), and then detached therefrom and attached to another (e.g., physical object 232), and vice versa. In an embodiment, the physical object may be an everyday object in the user's home or office. In an embodiment, the physical object may be custom-made to have a specific shape. For instance, the physical object may be part of a set of physical objects that include a plastic ball, a plastic cube, and plastic cylinder that are sold with the haptic accessory apparatus. A user may select from the set a physical object that is a best proxy for a virtual object in the VR or AR environment.

Returning to FIG. 5, the sensor information from the motion sensor in step 505 may indicate at least one of a speed at which the physical object is being moved, a direction at which the physical object is being moved, a velocity (speed and direction) at which the physical object is being moved, a rate and direction of acceleration on the physical object. In an embodiment, the sensor information may additionally or alternatively indicate a position or orientation of the physical object. As discussed above, the sensor information from the motion sensor may include raw sensor information that the motion sensor provided directly to a communication interface unit 115/215/315/315A of the haptic accessory apparatus 110/210/310A/310B/410, or may include processed sensor information generated by the processor 117/217/317/317A based on the raw sensor information. Further, FIGS. 6 and 7 illustrate motion of the haptic accessory apparatus 310A/310B, which is attached to a physical object 231/232. In FIG. 6, the physical object 231 may be a Pringles® can or other elongated cylindrical container, and is being used as a proxy for virtual object 651 (a virtual light saber). FIG. 6 illustrates the physical object 231 being moved (by a user) along a velocity vector V₁, which may be part of a sword swing motion. A motion sensor 313A of the haptic accessory apparatus 310A may measure the velocity of the haptic accessory apparatus 310A, which is the same as the velocity of the physical object 231. The motion sensor may output raw sensor information that is communicated to a computer system of the display device 625, which may determine, based on the raw sensor information, that the physical object 231 is moving with velocity V₁. In FIG. 7, the physical object 232 is a tissue box being used as a proxy for a virtual 3D tile. The physical object 232 is being moved, or more specifically lowered, along a velocity vector V₂. The motion sensor 313A may similarly generate raw sensor information that indicates the velocity vector V₂ of the physical object 232.

Returning to FIG. 5, in step 507, the processor 121/221 controls the virtual object based on the sensor information. For instance, the sensor information may describe movement of the physical object, and the processor may control movement of the virtual object to match the movement of the physical object. FIG. 6, for example, illustrates the virtual object 651 being controlled to move on the display device 625 with a velocity V that is substantially the same as the velocity vector V₁ of the physical object 231, in terms of direction of movement, speed, or both. FIG. 6 may illustrate the physical object 231 being swung by a user during gameplay. As a result, the computer system to which the display device 625 belongs may determine a velocity of the swinging motion, and control the virtual object 651 to be displayed as being swung with the same or similar velocity. In another embodiment, velocity data from the motion sensor of the haptic accessory apparatus 310A may represent rotational velocity of the physical object 231, which may indicate a direction of rotation and speed of rotation. As a result, the computer system to which the display device 625 belongs may control the virtual object 651 to be displayed as being rotated with the same or similar rotational velocity. Additionally, FIG. 7 also illustrates the computer system to which the display device 625 belongs controlling the virtual object 652 to be displayed as moving with the same velocity vector V as the velocity vector V₂ of the physical object 232. In another embodiment, the haptic accessory apparatus 310A/310B may lack the functionality for sensing position or movement of the physical object 231/232. In such a situation, the haptic accessory apparatus 310A/310B may still output a haptic effect based on an environmental condition of the physical environment or virtual environment, such as a surface property of the respective virtual object 651/652 (e.g., output an ESF effect to represent a surface texture of the virtual object 651/652).

Returning to FIG. 5, in step 509, the processor 121/221 may determine that a haptic effect associated with the virtual object is to be generated. In an embodiment, the haptic effect may be triggered by an event in the VR or AR environment, such as an event in the sword fighting game or 3D Tetris® game discussed above. For instance, such an event may be a contact event between the virtual object (e.g., the virtual light saber) coming into contact with another virtual object (e.g., another virtual light saber as part of a simulated sword fight, or a virtual wall or virtual floor). In an embodiment, the processor 121/221 may determine parameter values of the haptic effect, such as a type of haptic effect (e.g., a vibrotactile effect to simulate contact or a ESF effect to simulate texture), which haptic actuator or which type of haptic actuator to generate the haptic effect, an amplitude of the haptic effect, a frequency of the haptic effect, timing of the haptic effect (e.g., duration, start time), and any other parameter value of the haptic effect. In an embodiment, the processor 121/221 may determine a drive signal waveform for the haptic effect, either by selecting a waveform identifier for a preexisting stored drive signal waveform, or by generating the signal waveform itself. In an embodiment, the processor 121/221 may use the haptic effect to convey what is happening to the virtual object, by determining the parameter values or drive signal waveform based on an interaction of the virtual object with the VR or AR environment. In an embodiment, the parameter values or drive signal waveform may be determined based on at least one of a virtual shape, virtual size, virtual temperature, or other virtual property of the virtual object. In an embodiment, the parameter values or drive signal waveform may be determined based on a physical property of the physical object to which the haptic accessory apparatus is attached, such as an estimated shape, estimated size, estimated mass, level of rigidity, temperature, or velocity of the physical object.

In an embodiment, if the computer system 120/220 and the haptic accessory apparatus 110/210/310A/310B/410 performed a pairing process and exchanged or reported information during the process, the processor 121/221 may determine the parameter values or the drive signal waveform for the haptic effect based on the exchanged or reported information. For instance, during the pairing process, the haptic accessory apparatus may report how many haptic output devices it has, what types of haptic output devices it has, where the haptic output devices are located within the conformable body of the haptic accessory apparatus, or a combination thereof. The processor 120/220 may be configured to determine the parameter values or drive signal waveform of the haptic effect based on the reported information.

In step 511, the processor 121/221 may communicate a signal to the haptic accessory apparatus 110/210/310A/310B/410 that indicates the haptic accessory apparatus 110/210/310A/310B/410 is to generate the haptic effect, such that the haptic effect is also generated at a physical object (e.g., 231/232/233/234) attached to the haptic accessory apparatus. In an embodiment, the signal may include a haptic command that indicates the haptic accessory apparatus 110/210/310A/310B/410 is to output a haptic effect. In an embodiment, the signal may include one or more parameter values of the haptic effect. In an embodiment, the signal may include the drive signal waveform, or a waveform identifier, of the haptic effect. In an embodiment, the signal may identify which haptic output device the haptic accessory apparatus 110/210/310A/310B/410 is to use in generating the haptic effect. The signal may be sent via a communication interface of the computer system 120/220, to the communication interface unit 115/215 of the haptic accessory apparatus 110/210/310A/310B/410.

As discussed above, in an embodiment a user may select a physical object (e.g., 231) as a proxy for a virtual object (e.g., 651) of a VR or AR environment, and attach a haptic accessory apparatus (e.g., 310A) to the physical object. This may be done before or after the application for the VR or AR environment has begun being executed by the computer system 120/220, or before or after the VR or AR environment has been displayed or otherwise rendered. In some instances, to indicate what physical object the user has selected as the proxy for the virtual object, the user may place the physical object in front of a camera 227 of the computer system 120/220 (if the system 120/220 has one). The camera 227 may capture an image of the physical object, and the processor 121/221 of the computer system 120/220 may receive the captured image of the physical object. The processor 121/221 may then associate the physical object with the virtual object (e.g., associate the physical object 231 with the virtual object 651) in a memory 123/223 of the computer system 120/220. In an embodiment in which the computer system (e.g., 120) has no camera, the computer system 120 may be paired with the haptic accessory apparatus 110/210/310A/310B/410 (e.g., via Bluetooth®) so that the haptic accessory apparatus 110/210/310A/310B/410 can perform motion sensor tracking (also referred to as inertial sensor tracking). The pairing may involve establishing communication between the computer system 120/220 and the apparatus 110/210/310A/310B/410. The pairing may be performed wirelessly, through a data cable, or a combination thereof. In an embodiment, the computer system 120/220 may be paired with multiple haptic accessory apparatuses simultaneously, which may be attached to different respective physical objects. In some instances, the computer system 120/220 may further associate every virtual object in the VR or AR environment with the different respective physical object.

In an embodiment, once a computer system 120/220 and a haptic accessory apparatus 110/210/310A/310B/410 are paired, movement of the haptic accessory apparatus is translated into movement of the virtual object through motion sensor tracking (as discussed above), visual tracking by a camera 227, or any combination thereof. Further, in an embodiment, a VR or AR engine of the VR or AR environment may cause the processor 121/221 to send a command to the haptic accessory apparatus 110/210/310A/310B/410 (via a wireless or wired interface). The engine can send the driving signals directly to a particular haptic output device 111a-b/211a-b/311a-c, or may send a command with a specific haptic effect ID that is associated with a haptic effect waveform saved on the haptic accessory apparatus. The haptic effect ID may specify parameter values, such as a frequency, waveform, amplitude, etc. The haptic accessory apparatus may then generate a drive signal waveform, or retrieve a drive signal waveform stored on the apparatus, or stored on the cloud.

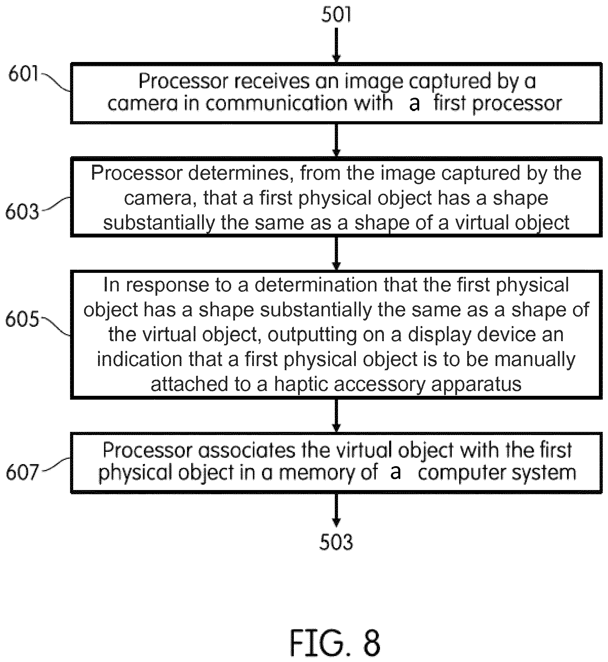

In an embodiment, as also discussed above, the computer system 120/220 may select a physical object for use as a proxy for a virtual object of a VR or AR environment. In some instances, this selection may be based on performing image processing to identify, from among physical objects that are suitable to be held as a handheld controller, a physical object having a shape that best matches a shape of the virtual object. In an embodiment shown in FIG. 8, a step 601 is included in which the processor 121/221 of the computer system 120/220 receives an image captured by a camera (e.g., 227) in communication with the processor 121/221. The image may be that of a physical location or surroundings in front of the camera 227. In an embodiment, if the camera is close to the user, the image may also be that of a physical location or surroundings of the user. The image that is captured by the camera may include a plurality of physical objects, which may be identified via an image processing algorithm. In step 603, the processor 121/221 determines, from the image captured by the camera 227, that a physical object (from among the plurality of physical objects) of the image has a shape substantially the same as a shape of the virtual object. For instance, the image captured by the camera 227 may capture the physical objects 231, 232, 233, 234. If the VR or AR environment involves virtual object 651 (a virtual light saber), the processor 121/221 may determine the virtual light saber has a shape that is elongated and cylindrical when displayed on the display device 625, and may determine that the physical object 231 has a shape that is substantially similar to the shape of the virtual light saber. In an embodiment, the camera 227 may scan its physical location or surroundings to capture images of a plurality of respective physical objects. An artificial intelligence (AI) engine may process the captured image to identify and classify various physical objects in the image.

In step 605, in response to a determination that the physical object has a shape substantially the same as a shape of the virtual object, the processor 121/221 may output, on the display device 125/225/625 of the computer system 120/220, an indication that the haptic accessory apparatus is to be manually attached to the physical object. For instance, with reference to the above example in which an image of the physical objects 231, 232, 233, 234 is captured, the processor may cause the physical object 231 to be highlighted in the image on the display device 125/225/625. The highlighting of the physical object 231 may indicate to a user that he or she is to attach a haptic accessory apparatus 110/210/310A/310B/410 to the physical object 231 (as opposed to the other physical objects 232, 233,234).

In step 607, the processor 121/221 may associate the virtual object (e.g., 651) with the physical object (e.g., 231) in a memory 123/223 of a computer system 120/220 to which the processor 121/221 belongs. In an embodiment, the association may be in a table stored in the memory 123/223, wherein one column of the table has a list of virtual objects, and another column of the table has a list of respective physical objects associated with the virtual objects.

In some cases, a haptic accessory apparatus may be attached to a first physical object, which may be used as a proxy for a first virtual object. The same haptic accessory apparatus may later be attached to a second physical object, which may be used as a proxy for a second virtual object. In an embodiment, different haptic accessory apparatuses may be attached to the same physical object. For instance, a first haptic accessory apparatus with a first type of haptic output device (e.g., a vibrotactile actuator) may be attached to the physical object. A second haptic accessory apparatus with a second type of haptic output device (e.g., an ESF actuator) may be attached to the physical object at the same time as the first haptic accessory apparatus is attached, or after the first haptic accessory apparatus is removed. In some cases, a virtual object may be represented by a first haptic accessory apparatus attached to a first physical object , and may later be represented by a second haptic accessory apparatus attached to a second physical object.

In an embodiment, after the processor 121/221 causes the VR or AR environment to generate a first virtual object (e.g., 651) and to control the first virtual object based on a first physical object (e.g., 231), the processor 121/221 may be configured to generate a second virtual object (e.g., 652) that replaces the first virtual object (e.g., 651), and to associate a different physical object (e.g., 232) with the second virtual object 652. For instance, the processor may cause a second virtual object 652 to be displayed on the display device 625 of the computer system. The virtual object 652 may be part of the same VR or AR environment that generated the virtual object 651, or may be part of a different VR or AR environment. The processor may further detect a change from the haptic accessory apparatus (e.g., 310A) being attached to the first physical object 231 to the haptic accessory apparatus 310B being attached to a second physical object 232 of a plurality of physical objects. The processor may then associate the second physical 232 object with the second virtual object 652 in the memory of the computer. In an embodiment, the first physical object 231 and the second physical object 232 may have different respective shapes.

In an embodiment, a haptic accessory apparatus (e.g., 110/210/310A/310B/410) may be configured to measure physical features of a physical object 231/232/233, 234 and to provide the measurement to a computer system 120/220. Thus, in an embodiment, the processor 121/221 of the computer system 120/220 may receive, from the haptic accessory apparatus, at least one of a first estimated shape and first estimated size of the first physical object (e.g., 231) when the haptic accessory apparatus is attached to the first physical object 231, and may further receive at least one of a second estimated shape and second estimated size of the second physical object 232 when the haptic accessory apparatus is attached to the second physical object 232.

In an embodiment, the processor 121/221 of the computer 120/220 may determine what haptic effect the haptic accessory apparatus 110/210/310A/310B/410 should generate on the physical object 231/232/233/234 based on properties of the physical object 231/232/233/234. For instance, the haptic effect may be determined based on at least one of the first estimated shape and first estimated size of the first physical object 231 when the haptic accessory apparatus is attached to the first physical object 231. In an embodiment, the processor may further determine a second haptic effect based on at least one of a second estimated shape or second estimated size of the second physical object 232 when the haptic accessory apparatus is attached to the second physical object 232.

### Additional Discussion of Various Embodiments

One aspect of the present application includes
embodiment 1, which relates to a haptic accessory apparatus for a virtual reality (VR) or augmented reality (AR) environment. The haptic accessory apparatus comprises a conformable body adapted to be attached to a physical object; a haptic output device disposed on or in the conformable body; a motion sensor disposed on or in the conformable body and configured to track motion of the haptic accessory apparatus; a wireless communication interface unit; a processor; and a power source. The wireless communication interface unit is configured to wirelessly communicate sensor information from the motion sensor to a computer system configured to execute an application that provides the VR or AR environment, and to receive a signal from the computer system that indicates the haptic accessory apparatus is to output a haptic effect, wherein the haptic output device of the haptic accessory apparatus is configured to output the haptic effect based on the signal. The processor is disposed on or in the conformable body and in communication with at least the haptic output device, the motion sensor, and the wireless communication interface unit. The power source is disposed on or in the conformable body and configured to provide power to at least the haptic output device, the processor, and the wireless communication interface unit.
Embodiment 2 includes the haptic accessory apparatus of embodiment 1, wherein the conformable body is formed from a flexible layer, and is reconfigurable to conform to different shapes of different physical objects.
Embodiment 3 includes the haptic accessory apparatus of embodiment 1 or 2, further comprising a user input element disposed on the conformable body, wherein the user input element is at least one of a trigger and a joystick, wherein the user input element is in communication with the processor.
Embodiment 4 includes the haptic accessory apparatus of claim any one of embodiments 1-3, wherein the haptic accessory apparatus is configured to provide handheld controller functionality and haptic functionality to the physical object when the haptic accessory apparatus is attached to the physical object.
Embodiment 5 includes the haptic accessory apparatus of any one of embodiments 1-4, wherein the conformable body is configured to be wrapped around at least a portion of the physical object.
Embodiment 6 includes the haptic accessory apparatus of embodiment 5, wherein the conformable body comprises an elastomeric material that is configured to be elastically stretched to fit around the at least a portion of the physical object.
Embodiment 7 includes the haptic accessory apparatus of embodiment 6, wherein the conformable body forms an elastic band having a loop shape.
Embodiment 8 includes the haptic accessory apparatus of embodiment 6 or 7, further comprising one or more additional sensors configured to sense at least one of stretching and bending of the conformable body, wherein the processor is configured to determine at least one of an estimated size and estimated shape of the physical object based on signals from the one or more additional sensors.
Embodiment 9 includes the haptic accessory apparatus of any one of embodiments 1-8, wherein the haptic output device is an electrostatic friction (ESF) actuator configured to simulate a texture based on the signal from the computer system.
Embodiment 10 includes the haptic accessory apparatus of any one of embodiments 1-8, wherein the haptic output device is a piezoelectric actuator configured to output a vibrotactile haptic effect based on the signal from the computer system.
Embodiment 11 includes the haptic accessory apparatus of any one of embodiments 1-10, wherein the sensor information output by the motion sensor indicates at least one of position and orientation of the haptic accessory apparatus.
Embodiment 12 includes the haptic accessory apparatus of any one of embodiments 1-11, wherein the conformable body is flexible and formed from a polymeric material, and wherein the processor, the haptic output device, the power source, the motion sensor, and the wireless communication interface unit are embedded in the polymeric material.
Embodiment 13 relates to a haptic-enabled system for providing a virtual reality (VR) or augmented reality (AR) environment. The system comprises a computer system, and a haptic accessory apparatus. The computer system comprises a first processor and a display device, wherein the first processor is configured to execute an application that provides the VR or AR environment, and the display device is configured to display the VR or AR environment. The haptic accessory apparatus comprises a conformable body, a haptic output device, a motion sensor, a wireless communication interface unit, a second processor, and a power source. The haptic accessory apparatus comprises a conformable body adapted to be attached to a physical object having no handheld controller functionality when detached from the haptic accessory apparatus, and wherein the haptic accessory apparatus is configured to provide a physical object with handheld controller functionality when the haptic accessory apparatus is attached to the physical object. The haptic output device is disposed on or in the conformable body. The motion sensor is disposed on or in the conformable body and configured to track motion of the haptic accessory apparatus. The wireless communication interface unit is configured to wirelessly communicate with the computer system. The second processor is disposed on or in the conformable body and in communication with the haptic output device, the motion sensor, and the wireless communication interface unit. The power source is disposed on or in the conformable body and configured to provide power to at least the haptic output device, the second processor, and the wireless communication interface unit. The first processor of the computer system is configured to receive sensor information from the motion sensor of the haptic accessory apparatus via the wireless communication interface unit thereof, to control a virtual object of the VR or AR environment based on the sensor information, to determine that a haptic effect associated with the virtual object is to be generated, and to communicate a signal to the second processor via the wireless communication interface unit, wherein the signal indicates that the haptic accessory apparatus is to generate the haptic effect, and the haptic output device of the haptic accessory apparatus is configured to output the haptic effect based on the signal.
Embodiment 14 includes the haptic-enabled system of embodiment 13, wherein the conformable body is flexible and formed from a polymeric material, and is reconfigurable to conform to different shapes of different physical objects, and wherein the processor, the haptic output device, the power source, the motion sensor, and the wireless communication interface unit are embedded in the polymeric material. The sensor information indicates at least one of a position and orientation of the haptic accessory apparatus, and wherein the first processor is configured to change at least one of a displayed position and orientation of the virtual object on the display device based on the sensor information, and wherein the first processor is configured to associate a physical object of a plurality of physical objects with the virtual object in a memory of the computer system.
Embodiment 15 includes the haptic-enabled system of embodiment 13 or 14, wherein the virtual object has a shape to be displayed on the display device, wherein the first processor is configured to determine that the physical object of the plurality of physical objects is to be associated with the virtual object by determining that a shape of the physical object is substantially the same as the shape of the virtual object.
Embodiment 16 includes the haptic-enabled system of embodiment 14 or 15, wherein the haptic accessory apparatus further comprises one or more additional sensors configured to sense at least one of stretching and bending of the conformable body of the haptic accessory apparatus, wherein the second processor is configured to determine at least one of an estimated size and estimated shape of the physical object of the plurality of physical objects based on additional sensor information from the one or more additional sensors, and to communicate the at least one of the estimated size and estimated shape of the physical object to the first processor.
Embodiment 17 includes the haptic-enabled system of embodiment 16, wherein the signal that indicates the haptic accessory apparatus is to generate the haptic effect indicates at least one of an intensity, frequency, and type of the haptic effect, and wherein the first processor is configured to determine the at least one of the intensity, frequency, and type indicated in the signal based on at least one of the estimated size and estimated shape of the physical object.
Embodiment 18 relates to a method for providing a virtual reality (VR) or augmented reality (AR) environment, the method performed by a computer system having a first processor and a display device. The method comprises executing, by the first processor of the computer system, an application that provides the VR or AR environment; causing, by the first processor, a virtual object of the VR or AR environment to be displayed on the display device of the computer system; receiving, from a haptic accessory apparatus, sensor information from a motion sensor of the haptic accessory apparatus, wherein the haptic accessory apparatus comprises a conformable body, a haptic output device, the motion sensor, a wireless communication interface unit, a second processor, and a power source, wherein the conformable body is adapted to be attached to a physical object having no handheld controller functionality when detached from the haptic accessory apparatus, wherein each of the haptic output device, the motion sensor, the wireless communication interface unit, the second processor, and the power source is disposed on or in the conformable body. The method further comprises controlling, by the first processor, the virtual object based on the sensor information; determining, by the first processor, that a haptic effect associated with the virtual object is to be generated; and communicating, by the first processor, a signal to the haptic accessory apparatus that indicates the haptic accessory apparatus is to generate the haptic effect, such that the haptic effect is generated at the physical object attached to the haptic accessory apparatus.
Embodiment 19 includes the method of embodiment 18, further comprising determining that the haptic accessory apparatus is to be attached to the first physical object by: receiving an image captured by a camera in communication with the first processor; determining, from the image captured by the camera, that a shape of the physical object is substantially the same as a shape of the virtual object; in response to a determination that the shape of the physical object is substantially the same as the shape of the virtual object, outputting on the display device an indication that the haptic accessory apparatus is to be manually attached to the physical object; and associating the haptic accessory apparatus with the physical object in the memory of the computer.
Embodiment 20 includes the method of embodiment 18 or 19, wherein the conformable body is formed from a flexible material and is configured to conform to a surface of the physical object, wherein the conformable body is reconfigurable to conform to different shapes of different physical objects. The virtual object is a first virtual object and a second virtual object and the physical object is a first physical object and a second virtual object of a plurality of physical objects. The method further comprising: causing, by the first processor, the second virtual object to be displayed on the display device of the computer system; detecting, by the first processor, a change from the haptic accessory apparatus being attached to the first physical object to the haptic accessory apparatus being attached to the second physical object; and associating, by the first processor, the second physical object with the second virtual object in the memory of the computer system, wherein the second virtual object is part of the VR or AR environment or is part of a different VR or AR environment.

While various embodiments have been described above, it should be understood that they have been presented only as illustrations and examples of the present invention, and not by way of limitation. It will be apparent to persons skilled in the relevant art that various changes in form and detail can be made therein without departing from the spirit and scope of the invention. Thus, the breadth and scope of the present invention should not be limited by any of the above-described exemplary embodiments, but should be defined only in accordance with the appended claims and their equivalents. It will also be understood that each feature of each embodiment discussed herein, and of each reference cited herein, can be used in combination with the features of any other embodiment. All patents and publications discussed herein are incorporated by reference herein in their entirety.

## Claims

1. A haptic accessory apparatus for a virtual reality (VR) or augmented reality (AR) environment, the haptic accessory apparatus comprising:
a conformable body adapted to be attached to a physical object;
a haptic output device disposed on or in the conformable body;
a motion sensor disposed on or in the conformable body and configured to track motion of the haptic accessory apparatus;
a wireless communication interface unit configured
to wirelessly communicate sensor information from the motion sensor to a computer system configured to execute an application that provides the VR or AR environment, and
to receive a signal from the computer system that indicates the haptic accessory apparatus is to output a haptic effect, wherein the haptic output device of the haptic accessory apparatus is configured to output the haptic effect based on the signal;
a processor disposed on or in the conformable body and in communication with at least the haptic output device, the motion sensor, and the wireless communication interface unit; and
a power source disposed on or in the conformable body and configured to provide power to at least the haptic output device, the processor, and the wireless communication interface unit.

2. The haptic accessory apparatus of claim 1, wherein the conformable body is formed from a flexible layer, and is reconfigurable to conform to different shapes of different physical objects.

3. The haptic accessory apparatus of claim 1 or 2, further comprising a user input element disposed on the conformable body, wherein the user input element is at least one of a trigger and a joystick, wherein the user input element is in communication with the processor.

4. The haptic accessory apparatus of claim any one of claims 1-3, wherein the haptic accessory apparatus is configured to provide handheld controller functionality and haptic functionality to the physical object when the haptic accessory apparatus is attached to the physical object.

5. The haptic accessory apparatus of any one of claims 1-4, wherein the conformable body is configured to be wrapped around at least a portion of the physical object.

6. The haptic accessory apparatus of claim 5, wherein the conformable body comprises an elastomeric material that is configured to be elastically stretched to fit around the at least a portion of the physical object.

7. The haptic accessory apparatus of claim 6, wherein the conformable body forms an elastic band having a loop shape.

8. The haptic accessory apparatus of claim 6 or 7, further comprising one or more additional sensors configured to sense at least one of stretching and bending of the conformable body, wherein the processor is configured to determine at least one of an estimated size and estimated shape of the physical object based on signals from the one or more additional sensors.

9. The haptic accessory apparatus of any one of claims 1-8, wherein the haptic output device is an electrostatic friction (ESF) actuator configured to simulate a texture based on the signal from the computer system.

10. The haptic accessory apparatus of any one of claims 1-8, wherein the haptic output device is a piezoelectric actuator configured to output a vibrotactile haptic effect based on the signal from the computer system.

11. The haptic accessory apparatus of any one of claims 1-10, wherein the sensor information output by the motion sensor indicates at least one of position and orientation of the haptic accessory apparatus.

12. The haptic accessory apparatus of any one of claims 1-11, wherein the conformable body is flexible and formed from a polymeric material, and wherein the processor, the haptic output device, the power source, the motion sensor, and the wireless communication interface unit are embedded in the polymeric material.
